# DEMANDE DE BREVET EUROPEEN

(11) **EP 0 836 261 A1**
(43) Date de publication de la demande: **15.04.1998**
(21) Numéro de dépôt: 97401808.7
(22) Date de dépôt: 28.07.1997
(51) Int. Cl.: H02G 15/06, H02G 15/068, H02G 15/22

(54) **Extrémité auto-porteuse de câble d'énergie**

(30) Priorité: 02.08.1996 FR 9609800; 19.12.1996 FR 9615641
(71) Demandeur: Alcatel Cable France, 92110 Clichy (FR)
(72) Inventeur: Gahungu, François, 62100 Calais (FR); Deguines, Pascal, 62250 Ferques (FR)
(74) Mandataire: Buffière, Michelle

(57) **Abrégé**

L'extrémité auto-porteuse de câble d'énergie comporte une portion terminale dénudée du câble, un cône déflecteur sur l'écran semi-conducteur dénudé du câble, un embout terminal de connexion sur l'âme dénudée et un corps tubulaire rigide et isolant, maintenu sur un support et muni d'un capuchon terminal opposé audit support et traversé par ledit embout, définissant une chambre autour de la portion terminale du câble.

Elle est caractérisée en ce qu'elle comporte au moins une ouverture (26) dans la partie inférieure de la chambre (25) pour sa mise à la pression ambiante extérieure et sa ventilation, et un ensemble (12) de jupes isolantes (13) sur l'isolation dénudée, entre le cône déflecteur (11) et l'embout de connexion (14).
Application : Raccordement d'un câble HT ou THT.

## Description

La présente invention porte sur une extrémité auto-porteuse de câble électrique, en particulier de câble haute ou très haute tension, ledit câble comportant une âme conductrice, une isolation, un écran semi-conducteur, un écran métallique conducteur et une gaine de protection extérieure.

Une telle extrémité est plus spécialement prévue pour le raccordement d'une ligne souterraine constituée par un câble d'énergie à un réseau aérien ou à un appareillage.

Le document Fr-A-2590739 divulgue une telle extrémité auto-porteuse de câble d'énergie. Cette extrémité comporte une portion terminale du câble successivement dénudée, un support de fixation de ladite portion terminale par rapport au sol, un cône déflecteur du champ électrique monté sur l'écran semi-conducteur dénudé et une portion attenante de l'isolation dénudée, un embout terminal conducteur de connexion monté sur l'âme conductrice dénudée et un corps tubulaire rigide et isolant porté par ledit support et s'étendant sans contact autour de la portion terminale du câble. Ce corps tubulaire est muni d'un capuchon terminal métallique, opposé audit support et traversé de manière étanche par l'âme conductrice dénudée et l'embout de connexion. Il est en porcelaine et présente une série de jupes périphériques étagées sur sa hauteur, pour un allongement des lignes de fuites entre le capuchon et le support lui-même métallique. Ce corps tubulaire définit une chambre étanche, autour de la portion terminale du câble, entre ledit support et ledit capuchon, qui est remplie de gaz diélectrique sous pression, en particulier de SF6.

Une telle extrémité est rendue auto-porteuse par son corps tubulaire isolant et rigide. Elle a ainsi l'avantage d'éviter l'utilisation de potelets ou autre structure support devant alors nécessairement s'étendre sur la longueur totale de l'extrémité de câble lorsque celle-ci comporte un corps tubulaire isolant mais relativement souple. Elle a par contre l'inconvénient de ne pas éviter les risques d'explosion et de projection de débris, lors de défauts électriques tels que des surtensions anormales ou des arcs électriques internes dans l'extrémité.

Pour minimiser ces risques et assurer une meilleure protection des personnes, des matériels et des biens, il est connu de prévoir en outre, sur de telles extrémités auto-porteuses une zone de rupture de la chambre sous pression de gaz diélectrique, avec une protection extérieure associée de rétention de projections en cas de déflagration dans la chambre et de rupture de cette zone. Bien entendu, la réalisation d'une telle zone de rupture rend l'extrémité plus complexe et plus encombrante.

La présente invention a pour but de résoudre les problèmes posés par les extrémités auto-porteuses de câble d'énergie, de manière à éviter les risques précités sans pour autant conduire à une réalisation plus complexe et/ou encombrante.

Elle a pour objet une extrémité auto-porteuse du type précité, caractérisée en ce qu'elle comporte au moins une ouverture dans la partie inférieure de ladite chambre, pour la mise de la chambre à la pression ambiante extérieure et une ventilation par circulation d'air dans la chambre, et un ensemble de deuxièmes jupes isolantes, monté sur l'isolation dénudée du câble, entre le cône déflecteur et l'embout terminal de connexion.

Cette extrémité a avantageusement en outre au moins l'une des caractéristiques additionnelles suivantes :
- le corps tubulaire est en matériau composite résistant mécaniquement aux conditions environnantes extérieures ;
- l'extrémité comporte des troisièmes jupes isolantes constituées par au moins un élément modulaire à ailettes ou en spirale, rapporté intérieurement sur le corps tubulaire ;
- l'extrémité comporte un matériau diélectrique, solide présentant des alvéoles internes, de remplissage au moins partiel de ladite chambre ;
- ledit matériau diélectrique est un matériau thermiquement conducteur ;
- la chambre présente plusieurs ouvertures prévues pour au moins une première d'entre elles dans sa partie inférieure et pour au moins une deuxième d'entre elles dans au moins l'une de ses parties supérieure et intermédiaire.

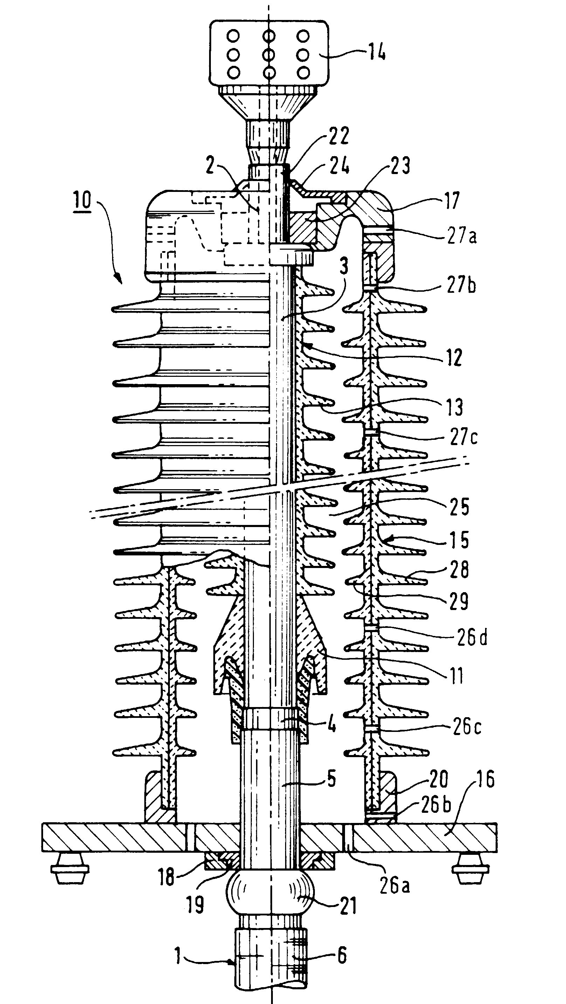

Les caractéristiques et avantages de la présente invention ressortiront de la description faite ci-après d'un mode de réalisation donné à titre d'exemple préférentiel et illustré dans la figure unique du dessin ci-annexé.

Cette figure unique représente une extrémité auto-porteuse de câble d'énergie, illustrée partiellement en coupe et en élévation.

Dans cette figure, la référence 1 désigne un câble d'énergie d'une ligne souterraine, ou plus précisément la portion terminale de ce câble qui a été dégagée de la ligne souterraine et est équipée d'une extrémité 10, selon la présente invention.

Ce câble comporte une âme conductrice centrale 2, une isolation 3, un écran semi-conducteur 4, un écran métallique 5 et une gaine de protection extérieure 6. La portion terminale du câble est successivement dénudée sur une partie de sa longueur.

L'extrémité 10 comporte cette portion terminale du câble et des équipements montés sur la partie dénudée de celle-ci. Ces équipements comportent un cône déflecteur de champ électrique 11 monté sur l'écran semi-conducteur dénudé 4 et une portion attenante de l'isolation dénudée 3, un ensemble 12 de jupes isolantes 13 associé au cône déflecteur et monté sur l'isolation dénudée 3, et un embout terminal conducteur de connexion 14 monté sur l'âme conductrice dénudée. Ils comportent également un corps tubulaire rigide et isolant 15, qui entoure sans contact le cône déflecteur 11 et l'ensemble 12 de jupes isolantes 13, un support 16 de fixation de la portion terminale du câble par rapport au sol et un capuchon 17 reçu sur le corps à l'opposé du support.

L'ensemble 12 de jupes isolantes 13 est de préférence constitué d'une série de sous ensembles ou de jupes isolantes, qui sont mis en place plus aisément sur le câble et sont ensuite solidarisés les uns aux autres et au cône déflecteur pour leur continuité. Le corps tubulaire 15, qui est sans contact avec l'ensemble 12, peut par contre être en contact avec le cône déflecteur si celui-ci est prévu de dimensions périphériques plus grandes que celles représentées.

Le support de fixation est un support métallique horizontal, avec un passage pour le câble. La portion terminale du câble est fixée par son écran métallique dénudé au support 16. Cette fixation est faite, dans cet exemple, par un couple de bagues complémentaires de retenue 18 et 19, la bague 18 pouvant être soudée sous le support autour du passage du câble et la bague 19 être retenue sur l'écran métallique et être reçue et maintenue par la bague 18. Une bride 20 épaulée intérieurement est solidaire et saillante au-dessus du support autour du passage pour le câble. Elle reçoit et retient le corps 15, pour le maintien du corps sur le support et coaxialement autour de la partie terminale du câble, en rendant ainsi l'extrémité auto-porteuse.

Un système de raccord 21 de mise à la terre est monté sur l'écran métallique dénudé 5, juste en dessous du support de fixation 16 et des bagues de retenue 18 et 19. Ce système de raccord peut être isolé ou non, de manière en tant que telle connue, selon les exigences des installations.

Le capuchon 17 est conducteur et généralement métallique. Il présente un passage prévu de manière connue pour permettre un guidage axial de l'âme du câble sur laquelle est monté l'embout de connexion 14 et pour assurer une étanchéité, autour de l'âme dénudée et de la partie arrière de l'embout de connexion. A cet effet, un manchon d'étanchéité 22 entoure la partie arrière de l'embout de connexion et s'entend sur l'âme dénudée jusqu'à l'ensemble 12 des jupes isolantes 13. Il porte une bague de centrage 23, qui est susceptible de coulisser axialement dans le passage du capuchon, et une bague extérieure d'étanchéité 24, qui forme soufflet d'étanchéité maintenu d'une part sur la périphérie du manchon 22 et d'autre part sur la périphérie du passage du capuchon 17.

Le corps isolant rigide 15 délimite avec le support 16 et le capuchon 17 une chambre intérieure 25 autour du cône déflecteur 11 et de l'ensemble 12 des jupes isolantes 13 en place sur le câble. L'extrémité inférieure de cette chambre peut être délimitée non pas par le support 16 mais par le cône déflecteur 11 quand celui-ci est en contact avec le corps isolant 15.

Cette chambre 25 communique avec l'extérieur par au moins une ouverture prévue dans sa partie inférieure, telle que l'ouverture 26a dans le support 16 et/ou l'ouverture 26b dans la bride 20, et/ou l'ouverture 26c dans la partie inférieure du corps 15, et/ou l'ouverture 26d également dans le corps 15 mais légèrement au dessus du cône déflecteur, pour la mise de la chambre à la pression ambiante extérieure et sa ventilation par une libre circulation d'air dans celle-ci. Elle présente aussi de préférence pour favoriser cette circulation d'air au moins une autre ouverture dans sa partie supérieure et/ou sa partie intermédiaire, telle que l'ouverture 27a dans le capuchon, l'ouverture 27b ou 27c dans le corps 15.

Le corps isolant 15 présente avantageusement un ensemble tubulaire de jupes isolantes étagées extérieurement 28 et également de préférence un autre ensemble de jupes isolantes étagées intérieurement 29, sur toute sa hauteur, pour un allongement résultant des lignes de fuite extérieurement comme intérieurement, entre le capuchon et le support métalliques.

Ce corps isolant et rigide 15 est constitué par exemple par un tube en porcelaine ou en matériau composite résistant mécaniquement dans le temps à des conditions environnantes sévères. Le matériau composite est en particulier une résine époxy chargée de fibres de verre. Il peut être en variante un polyuréthane ou un autre matériau analogue. Les jupes extérieures et intérieures sont en forme d'ailettes d'isolateurs. Elles peuvent être constituées d'un seul tenant ou par des modules à ailettes. En variante les jupes intérieures 29 sont constituées par des anneaux, ou encore par des spirales qui sont rapportées et posées avec ou sans discontinuité sur le tube. En particulier, le tube est fabriqué en présentant ses jupes extérieures alors que les jupes intérieures sont rapportées. Ces dernières sont alors avantageusement réalisées en silicone. Les jupes extérieures peuvent également être réalisées en silicone et être alors également rapportées sur le tube initialement lisse extérieurement.

Une telle extrémité auto-porteuse résout les problèmes posés par les extrémités auto-porteuses de l'art connu. En effet, elle confine dans la chambre 25 les dangers potentiels en cas de défaut, sans pour autant nécessiter une zone spéciale de rupture puisque cette chambre est mise à la pression ambiante extérieure avec l'air circulant librement dans la chambre. La ventilation par cette circulation d'air évite toute condensation d'humidité dans la chambre.

En outre, l'extrémité peut comporter un matériau diélectrique solide de remplissage de la chambre, constitué par un composé alvéolaire et notamment par des éléments individuels remplissant au moins partiellement la chambre. Un tel matériau diélectrique est de préférence choisi pour présenter une conductivité thermique élevée. Il est en particulier formé par des billes ou de la poudre de silice ou alumine. La circulation d'air dans la chambre favorise l'échange thermique avec l'extérieur.

## Revendications

1. Extrémité auto-porteuse de câble d'énergie, dont ledit câble comprend une âme conductrice, une isolation, un écran semi-conducteur, un écran métallique conducteur et une gaine de protection extérieure, comportant une portion terminale successivement dénudée dudit câble, un cône déflecteur de champ électrique sur l'écran semi-conducteur dénudé et une portion attenante de l'isolation dénudée, un embout terminal conducteur de connexion sur l'âme dénudée, un support de fixation traversé par la portion terminale dénudée du câble et fixé à l'écran métallique dénudé, un corps tubulaire périphérique rigide et isolant muni de premières jupes isolantes extérieures et maintenu sur ledit support, en s'étendant autour dudit cône déflecteur de champ et jusqu'à l'embout de connexion, et un capuchon terminal monté sur le corps tubulaire à l'opposé dudit support et traversé de manière étanche par l'âme conductrice et l'embout de connexion, ledit corps monté sur ledit support et muni dudit capuchon définissant ainsi une chambre longitudinale autour de la portion terminale dénudée dudit câble, caractérisée en ce qu'elle comporte au moins une ouverture (26a-26d) dans au moins la partie inférieure de ladite chambre (25) située du côté dudit support (16), pour la mise de la chambre à la pression ambiante extérieure et une ventilation par circulation d'air dans la chambre, et un ensemble (12) de deuxièmes jupes isolantes (13), monté sur l'isolation dénudée (3) du câble, entre ledit cône déflecteur (11) et ledit embout de connexion (14).

2. Extrémité selon la revendication 1, caractérisée en ce que ledit corps périphérique tubulaire (15) comporte un tube en matériau composite isolant et résistant mécaniquement aux conditions extérieures environnantes.

3. Extrémité selon la revendication 2, caractérisée en ce que ledit matériau composite est une résine époxy chargée de fibres de verre.

4. Extrémité selon l'une des revendications 2 et 3, caractérisée en ce que lesdites premières jupes isolantes extérieures (28) sont rapportées sur ledit tube en matériau composite.

5. Extrémité selon l'une des revendications 1 à 4, caractérisée en ce que ledit corps périphérique tubulaire (15) comporte des troisièmes jupes isolantes intérieures (29).

6. Extrémité selon la revendication 5, caractérisée en ce que lesdites troisièmes jupes isolantes (29) sont constituées par des modules à ailettes rapportés intérieurement sur ledit corps périphérique tubulaire (15).

7. Extrémité selon la revendication 5, caractérisée en ce que lesdites troisièmes jupes isolantes (29) sont constituées par au moins un élément en spirale, rapporté intérieurement sur ledit corps périphérique tubulaire (15).

8. Extrémité selon l'une des revendications 5 à 7, caractérisée en ce que lesdites troisièmes et/ou premières jupes isolantes (29,28) sont en silicone.

9. Extrémité selon l'une des revendications 1 à 8, caractérisée en ce qu'elle comporte un matériau diélectrique solide présentant des alvéoles internes de remplissage au moins partiel de ladite chambre (25).

10. Extrémité selon la revendication 9, caractérisée en ce que ledit matériau diélectrique est un matériau thermiquement conducteur.

11. Extrémité selon la revendication 10, caractérisée en ce que ledit matériau diélectrique est en silice ou en alumine, sous forme de billes ou de poudre pour définir ses alvéoles internes.

12. Extrémité selon l'une des revendications 1 à 11, caractérisée en ce qu'elle comporte plusieurs ouvertures (26, 27) de ladite chambre (25), situées pour au moins une première d'entre elles (26) dans la partie inférieure de ladite chambre et pour au moins une deuxième d'entre elles (27) dans au moins l'une des parties supérieure et intermédiaire de ladite chambre.
